# EUROPEAN PATENT APPLICATION

(11) **EP 3 590 331 A1**
(43) Date of publication of application: **08.01.2020**
(21) Application number: 19150467.9
(22) Date of filing: 07.01.2019
(51) Int. Cl.: A01K 1/02, A01K 29/00, B64D 11/00

(54) **COMPUTING DEVICE COMMUNICATIVELY COUPLED TO ANIMAL CRATE**

(30) Priority: 09.01.2018 US 201815866259
(71) Applicant: Rockwell Collins, Inc., Cedar Rapids, IA 52498 (US)
(72) Inventor: POZZI, Alexander, Winston-Salem, NC 27104 (US); HISATA, Suzuko, Atlanta, GA 30309 (US); GARING, Francis Xavier L., Atlanta, GA 30307 (US); HENSHAW, Robert, Newnan, GA 30265 (US); MELLETT, Alyssa G., Kennesaw, GA 30152 (US); BROOKS, Julia M., Atlanta, GA 30313 (US); WILKEY, Robert, Atlanta, GA 30329 (US); BRITTON, Adam, Smyrna, GA 30080 (US); GU, Jae Hun, Doraville, GA 30340 (US)
(74) Representative: Algemeen Octrooi- en Merkenbureau B.V.

(57) **Abstract**

A system may include an aircraft passenger seat implemented in an aircraft and an aircraft passenger computing device implemented in, on, or in proximity to the aircraft passenger seat. The aircraft passenger computing device may be communicatively coupled to an animal crate assembly onboard the aircraft. The aircraft passenger computing device may include an aircraft passenger display viewable by a passenger and a processor communicatively coupled to the aircraft passenger display. The processor may be configured to: receive sensor data from a sensor implemented in or on the animal crate assembly; receive captured animal crate assembly video data from a camera implemented in or on the animal crate assembly; generate graphical data based on the sensor data and the captured animal crate assembly video data; and output the graphical data to the aircraft passenger display for presentation to the passenger.

## Description

As of 2017, over two million pets and other live animals are transported by aircraft in the United States per year. Animals can undergo substantial stress while travelling due to a variety of reasons, such as separation anxiety from their owners, fear, varying temperatures, unfamiliar conditions, and turbulence. In some instances, such stressors result in death of the animal. For example, air travelling pets have been reported to die from extreme hot and cold temperatures or lengthy layovers without their owners. Additionally, on occasion air cargo pet crates are lost or sent to an incorrect location. Further, air cargo pet crates are sometimes handled excessively roughly, which may injure or cause the death of pets. Additionally, pets lack the ability to communicate their needs when in a pet crate in a cargo compartment of an aircraft.

Additionally, pet owners often worry about the wellbeing of their pets, and the pet owners are unable to comfort their pets while the pets are in a pet crate away from the owners. When a pet travels as air cargo, the pet owner has no ability to monitor health, location, and the airline's care of the pet. Pet owners lack the ability to know the conditions that a pet is going through during the airline's handling of the pet crate. Further, currently there is no way for dangerous conditions to be continuously monitored and detected until it is too late to save a pet's life.

Currently implemented animal crates used in air travel fail to alleviate many of the stressors that animals undergo during air travel, fail to provide animal owners the ability to monitor the animals' conditions, location, and airlines' care of the animals, and fail to provide a means for the animal owners to comfort the animals during air travel.

In one aspect, the invention is related to an apparatus comprising an aircraft passenger computing device implemented in, on, or in proximity to the aircraft passenger seat and communicatively coupled to an animal crate assembly onboard the aircraft

In a further aspect, the invention is related to a system comprising an aircraft passenger seat, an animal crate assembly and said computing device.

In a further aspect, the invention is directed to a method for operating an aircraft passenger computing device implemented in, on, or in proximity to an aircraft passenger seat.

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a schematic block diagram of an exemplary embodiment of an animal crate assembly according to the inventive concepts disclosed herein.
FIG. 2 is a schematic block diagram of an exemplary embodiment of a network topology according to the inventive concepts disclosed herein.
FIG. 3 is an isometric view of an exemplary embodiment of an animal crate assembly according to the inventive concepts disclosed herein.
FIG. 4 is a see-through side view of the animal crate assembly of FIG. 3 of an exemplary embodiment according to the inventive concepts disclosed herein.
FIG. 5 is a see-through top view of the animal crate assembly of FIG. 3 of an exemplary embodiment according to the inventive concepts disclosed herein.
FIG. 6 is a see-through rear view of the animal crate assembly of FIG. 3 of an exemplary embodiment according to the inventive concepts disclosed herein.
FIG. 7 is front and side view of an exemplary embodiment of an animal crate assembly according to the inventive concepts disclosed herein.
FIG. 8 is an isometric view of the animal crate assembly of FIG. 7 of an exemplary embodiment according to the inventive concepts disclosed herein.
FIG. 9 is another isometric view of the animal crate assembly of FIG. 7 of an exemplary embodiment according to the inventive concepts disclosed herein.
FIG. 10 is another front and side view of the animal crate assembly of FIG. 7 of an exemplary embodiment according to the inventive concepts disclosed herein.
FIG. 11 is a front and interior view of the animal crate assembly of FIG. 7 of an exemplary embodiment according to the inventive concepts disclosed herein.
FIG. 12 is another isometric view of the animal crate assembly of FIG. 7 of an exemplary embodiment according to the inventive concepts disclosed herein.
FIG. 13A is another isometric view of the animal crate assembly of FIG. 7 of an exemplary embodiment according to the inventive concepts disclosed herein.
FIG. 13B a cross-sectional view of the inner crate's trapdoor of the animal crate assembly of FIG. 13A of an exemplary embodiment according to the inventive concepts disclosed herein.
FIG. 14A is front view of an exemplary embodiment of a computing device according to the inventive concepts disclosed herein.
FIG. 14B is front view of an exemplary embodiment of a computing device implemented as an aircraft passenger computing device implemented in and/or on an aircraft passenger seat according to the inventive concepts disclosed herein.
FIG. 15 is a diagram of an exemplary embodiment of a method according to the inventive concepts disclosed herein.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting. The scope of the invention is only limited by the appended claims.

As used herein a letter following a reference numeral is intended to reference an embodiment of the feature or element that may be similar, but not necessarily identical, to a previously described element or feature bearing the same reference numeral (e.g., 1, 1A, 1 B). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to an apparatus, a system, and a method. Some embodiments may include an animal crate assembly (e.g., a pet crate assembly) configured to: protect an animal from injury caused by impact or mishandling of the animal crate assembly; protect an animal from hazardous environmental conditions; send location data of the animal crate to a remote computing device via a network; monitor environmental conditions (e.g., temperature and/or impacts) and send environmental condition data to a remote computing device via a network; allow for communications (e.g., unidirectional or bidirectional communications, such as data communications, audio communications, and/or video communications) between the animal and the animal owner by sending and/or receiving data to and/or from a remote computing device via a network; and/or to dispense calming elements (e.g., treats and/or calming scents) to the animal.

Embodiments may include an animal crate assembly configured to transport an animal (e.g., a pet; e.g., a dog, a cat, or a pig) during travel (e.g., by a vehicle, such as an automobile, train, ship, or aircraft). The animal crate assembly may be implemented as an animal enclosure configured to house an animal. In some embodiments, the animal crate assembly may include at least one processor, at least one sensor, at least one display, at least one speaker, at least one microphone, at least one camera, at least one global positioning system (GPS) device, at least one light, at least one scent dispenser, at least one treat dispenser, at least one fan, at least one antenna or some combination thereof. The animal crate assembly may be configured to monitor the health, safety, and status of an animal during transport. The animal crate assembly may be configured to communicate (e.g., unidirectionally or bidirectionally communicate, such as by data communications, audio communications, and/or video communications) with at least one remote computing device (e.g., a desktop computing device, an aircraft computing device (e.g., a seat-back computing device), and/or a mobile computing device (e.g., a laptop computing device, tablet computing device, and/or a phone computing device)), such as the animal owner's computing device. The animal crate may be configured to transport an animal, such as by vehicle (e.g., aircraft, train, automobile, and/or ship), from one location to another, and the animal crate assembly may be configured to communicate various data with the animal owner while the animal crate assembly is in transit.

When reference is made to a passenger, this may be interpreted as a passenger seated in a passenger seat, wherein the passenger seat may be associated with a feature, for example a display of microphone, that is discussed in relation to the seat or the passenger. Terms such as "in view of' viewable are meant to define that the respective feature can easily be seen and monitored by the respective passenger, or a passenger seated in the respective seat or by an animal present in the respective animal crate assembly. Features being disclosed as being part of the current system are also applicable or optional features of the claimed or discussed apparatus. When such feature is discussed in relation to a passenger seat or a an animal crate assembly of the system, this may be interpreted as in relation to a passenger seat or animal crate assembly (to be) associated with the feature.

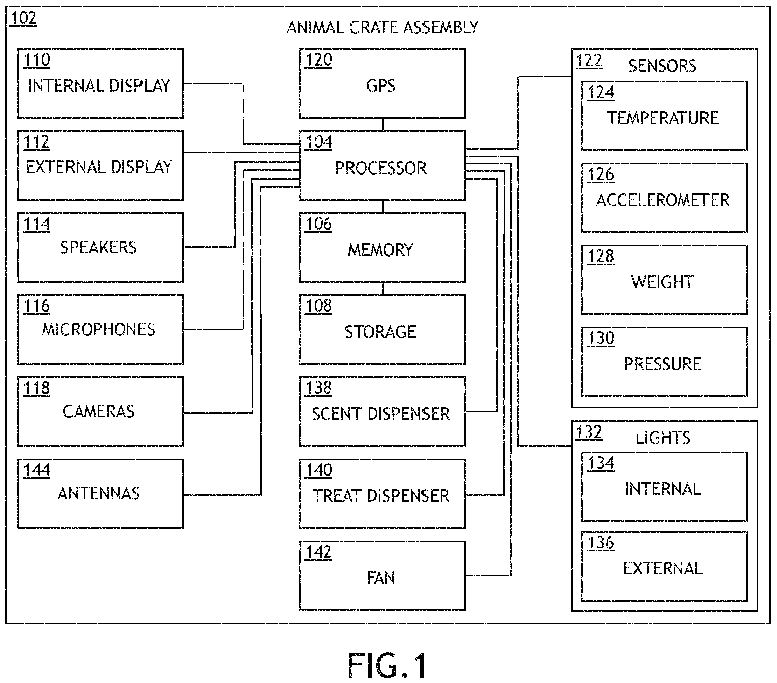

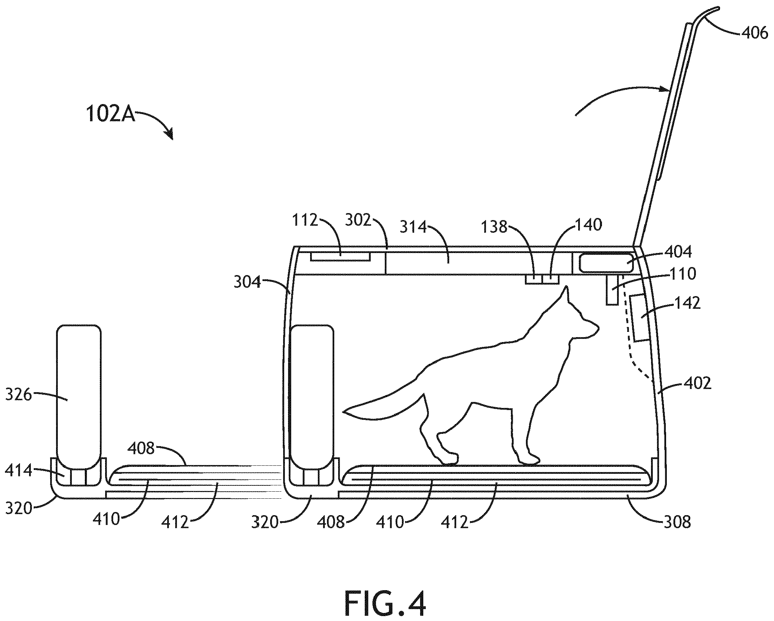

Referring now to FIG. 1, an exemplary embodiment of an animal crate assembly 102 according to the inventive concepts disclosed is depicted. The animal crate assembly 102 may be implemented as a transportable animal enclosure configured to house an animal (e.g., 418, as shown in FIG. 4). The animal crate assembly 102 includes a processor 102, a memory 106, a storage 108, an internal animal crate assembly display 110, an external animal crate assembly display 112, speakers 114, microphones 116, cameras 118, a GPS device 120, lights 132, a scent dispenser 138, a treat dispenser 140, a fan 142, and antennas 144, some or all of which may be communicatively coupled at any given time. Additionally, while not shown, the animal crate assembly may include a battery configured to power various components of the animal crate assembly 102.

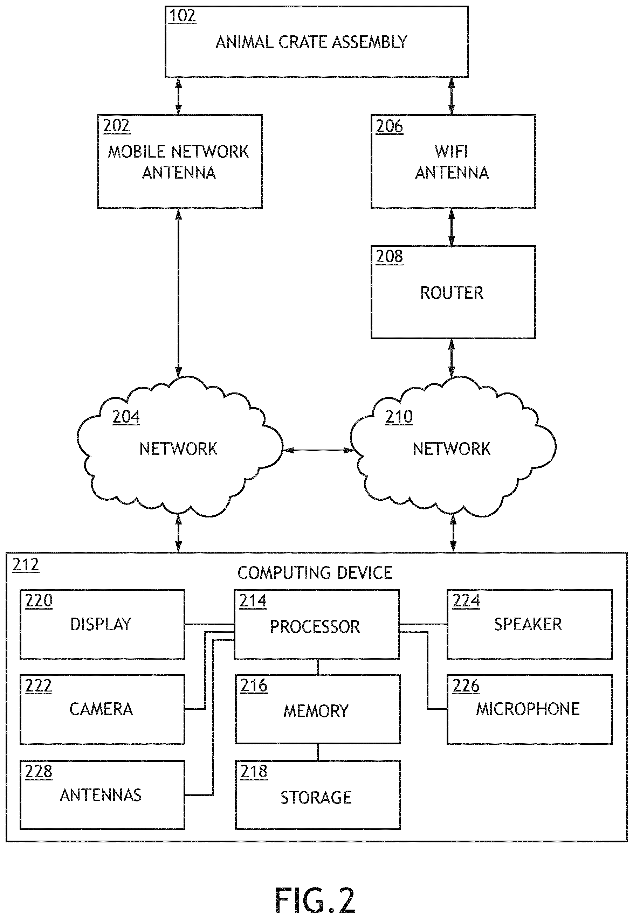

The processor 104 may be configured to run various software applications or computer code stored (e.g., maintained) in a non-transitory computer-readable medium (e.g., memory 106 and/or storage 108) and configured to execute various instructions or operations. For example, the processor 104 is configured to receive data and/or instructions from various sources (e.g., the memory 106, the storage 108, the sensors 122, the GPS device 120, the scent dispenser 138, the treat dispenser 140, the microphones 116, the cameras 118, the antennas 144, and/or another computing device (e.g., 212, as shown in FIG. 2) via one or more of the antennas 144). The processor 104 is configured to perform various operations on the received data and/or in response to the received data. Additionally, the processor 104 is configured to output data (e.g., processed data and/or received data) and/or instructions to various destinations (e.g., the memory 106, the storage 108, the internal display 110, the external display 112, the speakers, the lights 132, the scent dispenser 138, the treat dispenser 140, the antennas 144, and/or another computing device (e.g., 212, as shown in FIG. 2) via one or more of the antennas 144). Additionally, for example, the processor 104 may be implemented as a special purpose processor configured (e.g., programmed) to execute instructions for performing any or all of the operations disclosed throughout. In some embodiments, the processor 104 may be implemented as any suitable number of processors.

The memory 106 and/or storage 108 may be configured to store various software applications, computer code, data, and/or instructions, which may be accessed by the processor 104. For example, the memory 106 and/or storage 108 may be configured to store data received from various sources (e.g., sensor data from the sensors 122, GPS data from the GPS device 120, scent dispenser data from the scent dispenser 138, treat dispenser data from the treat dispenser 140, audio data from the microphones 116, video data from the cameras 118, antenna data from the antennas 144, and/or data from another computing device (e.g., 212, as shown in FIG. 2)). Additionally, for example, the memory 106 and/or storage 108 may be configured to store processor output data associated with processed data and/or output instructions from the processor 104. In some embodiments, the memory 106 and/or storage 108 may be implemented as any suitable number of memory and/or storage.

In some embodiments, the memory 106 and/or storage 108 may be loaded with travel information data and animal information data, for example, when the animal crate assembly 102 begins its transportation. The travel information data may include information associated with the travel route throughout transportation of the animal crate assembly. For example, the travel information data may include GPS data and expected time information associated with locations (e.g., departure location(s), connecting locations(s), arrival location(s)) along a travel route. The travel information data may also include flight information data and ticketing data. In some embodiments, the processor 104 may be configured to determine whether the animal crate assembly 102 is currently at a planned location of the travel information data throughout the transportation of the animal crate assembly based on current GPS data received from the GPS device 120 and predetermined travel information data stored in the memory 106 and/or storage 108, such as by comparing the current GPS data against locations along a travel route of the predetermined travel information. If the processor 104 determines that the current location of the animal crate assembly 102 is improper, the processor 104 may send an alert message via one or more of the antennas 144 to another computing device (e.g., 212; e.g., the animal owner's computing device and/or an airline's computing device) notifying the other computing device that the animal crate assembly 102 is at the current location and that the current location is not a planned location; additionally, the processor 104 may be configured to output an instruction or signal to the external lights causing the external lights to illuminate as an alert, which indicates that there is an issue with the animal crate assembly 102.

The animal information data may include data associated with the animal being transported in the animal crate assembly 102. For example, the animal information data may include the name and contact information for the animal's owner, the name of the animal, the type of animal, the breed of the animal, the color(s) of the animal, the weight of the animal, a photograph of the animal, and/or an itinerary of the animal.

The processor 104 is configured to output graphical data derived from the travel information data and/or the animal information data to the external display 112 for display on the outside of the animal crate assembly 102.

The internal display 110 may be implemented inside of the animal crate assembly 102 such that the animal of the animal crate assembly 102 may view the internal display 110. For example, the internal display 110 may be suspended from the ceiling near a rear wall (e.g., a wall opposite of a door) of the animal crate assembly 102 or mounted on the rear wall. The internal display 110 may be configured to receive graphical signals and/or graphical data from the processor 104. The internal display 110 may be configured to present graphical images or video to the animal. For example, the internal display 110 may be configured to display live video of the animal's owner (e.g., received from the computing device 212, shown in FIG. 2) or prerecorded video of the animal's owner (e.g. stored in the memory 106 and/or the storage 108). In some embodiments, the animal crate assembly 102 may include any suitable number of internal displays at any suitable location(s).

The external display 112 may be implemented in or on an exterior of the animal crate assembly 102 such that people (e.g., airline personnel and airport personnel) and/or optical equipment can view information presented on the external display 112. For example, the external display 112 may be mounted on top of the animal crate assembly 102 near a door of the animal crate assembly 102. The external display 112 may be configured to receive graphical signals and/or graphical data from the processor 104. The external display 112 may be configured to present graphical information to people and/or optical equipment. For example, the external display 112 may be configured to present graphical information associated with the travel information data and/or the animal information data. In some embodiments, the external display 112 may be configured to display machine readable information (e.g., a barcode and/or a matrix barcode) that may be read by optical equipment used by the airline or airport, such as for identifying and tracking the animal crate assembly while in transit. In some embodiments, the animal crate assembly 102 may include any suitable number of external displays at any suitable location(s).

The speakers 114 may be implemented inside of the animal crate assembly 102 such that the animal of the animal crate assembly 102 may hear the speakers 114. For example, the speakers 114 may be suspended from the ceiling near a rear wall (e.g., a wall opposite of a door) of the animal crate assembly 102 or mounted on the rear wall. The speakers 114 may be configured to receive audio signals and/or audio data from the processor 104. The speakers 114 may be configured to present audio to the animal. For example, the speakers 114 may be configured to output live audio of the animal's owner (e.g., received from the computing device 212, shown in FIG. 2) or prerecorded audio of the animal's owner (e.g. stored in the memory 106 and/or the storage 108). In some embodiments, the animal crate assembly 102 may include any suitable number of speakers at any suitable location(s).

The microphones 116 may be implemented inside of the animal crate assembly 102 and/or on the exterior of the animal crate assembly 102. For example, an interior microphone 116 may be configured to capture audio of the animal. For example, the interior microphone 116 may be suspended from the ceiling near a rear wall (e.g., a wall opposite of a door) of the animal crate assembly 102 or mounted on the rear wall. The interior microphone 116 may be configured to capture audio of the animal. For example, the interior microphone 116 may be configured to capture live audio of the animal and output the live audio to the processor 104, which may route the live audio to another computing device (e.g., 212, shown in FIG. 2). Additionally, the interior microphone 116 may be configured to capture audio of the animal and output the audio to the processor 104 to be recorded in the memory 106 and/or storage 108 such that the processor 104 may route the recorded audio to another computing device (e.g., 212, shown in FIG. 2) at a later time. In some embodiments, if the processor 104 determines that the internal microphone 116 is capturing animal noises exceeding a predetermined loudness threshold, the processor 104 may route an alert to a computing device (e.g., 212) of the animal owner such that the animal owner can initiate a two-way live audio-video session to comfort the animal. Further, for example, an external microphone 116 may be implemented on an exterior of the animal crate assembly in proximity to the external display 112. The external microphone 116 may be configured to capture environmental audio outside of the animal crate assembly 102. For example, the external microphone 116 may be configured to capture live audio of the environment outside of the animal crate assembly and output the live audio to the processor 104, which may route the live audio to another computing device (e.g., 212, shown in FIG. 2). In some embodiments, the animal crate assembly 102 may include any suitable number of microphones at any suitable location(s).

In some embodiments, the processor 104 may be configured to perform active noise cancellation operations to cancel out environmental noise within the animal crate assembly 102. For example, the processor 104 may receive a stream of audio detected from the internal microphone 116 and/or the external microphone 116 and output noise cancelling audio signals to the speakers 114 such that the environmental noise is diminished within the animal crate assembly 102. In some embodiments, performance of the active noise cancellation operations actively cancels out audio across frequencies audible to animals (e.g. dogs or cats).

The cameras 118 may be implemented inside of the animal crate assembly 102 and/or on the exterior of the animal crate assembly 102. For example, an interior camera 118 may be configured to capture video of the animal. For example, the interior camera 118 may be suspended from the ceiling near a rear wall (e.g., a wall opposite of a door) of the animal crate assembly 102 or mounted on the rear wall. The interior camera 118 is configured to capture video of the animal. For example, the interior camera 118 is configured to capture live video of the animal and output the live video to the processor 104, which may route the live video to another computing device (e.g., 212, shown in FIG. 2). Additionally, the interior camera 118 may be configured to capture video of the animal and output the video to the processor 104 to be recorded in the memory 106 and/or storage 108 such that the processor 104 may route the recorded video to another computing device (e.g., 212, shown in FIG. 2) at a later time. Further, for example, an external camera 118 may be implemented on an exterior of the animal crate assembly in proximity to the external display 112. The external camera 118 may be configured to capture environmental video outside of the animal crate assembly 102. For example, the external camera 118 may be configured to capture live video of the environment outside of the animal crate assembly and output the live video to the processor 104, which may route the live video to another computing device (e.g., 212, shown in FIG. 2). In some embodiments, the animal crate assembly 102 may include any suitable number of cameras at any suitable location(s).

The GPS device 120 may receive GPS data from GPS satellites and may provide the GPS data and/or current location data to the processor 104, which may in turn perform operations based on the GPS data and/or the current location data. Additionally, the processor 104 may output the GPS data and/or the current location data to another computing device (e.g., 212, as shown in FIG. 2). The GPS device 120 may include a GPS receiver and a processor. For example, the GPS device 120 may receive or calculate location data from a sufficient number (e.g., at least four) of GPS satellites in view of the animal crate assembly 102 such that a GPS solution may be calculated.

The sensors 122 may include a temperature sensor 124, an accelerometer 126, a weight sensor 128, an air pressure sensor 130, and/or an animal wearable sensor device (e.g., 416), as well as any suitable sensors. The sensors 122 may be configured to sense and measure conditions and output sensor data (e.g., temperature data, accelerometer data, weight data, pressure data, and/or animal sensor data) to the processor 104. The processor 104 may be configured to perform any of various operations based on or in response to receiving the sensor data. For example, the processor 104 may be configured to output the sensor data and/or information associated with the sensor data to another computing device (e.g., 212). Additionally, for example, the processor 104 may output the sensor data to the memory 106 and/or the storage 108 to be stored. Further, for example, the processor 104 may be configured to monitor conditions inside of the animal crate assembly 102 and output an alert for dangerous conditions. The processor 104 may determine that a condition inside of the animal crate assembly 102 is above an upper condition threshold or below a lower condition threshold; in response, the processor may output an alert message to another computing device (e.g., 212) to indicate that the condition is above an upper condition threshold or below a lower condition threshold and to indicate what the condition is. Similarly, the processor 104 may output an instruction or signal to illuminate the external lights 136 as an alert that the condition is outside of a safe range of conditions. Additionally, for example, if the processor 104 determines that the condition is above an upper condition threshold or below a lower condition threshold, the processor may send an instruction or signal to activate or deactivate a component (e.g., the fan 142, the scent dispenser 38, the treat dispenser 140, one or more of the cameras 118, one or more of the microphones 116, and/or one or more of the lights 132) of the animal crate assembly 102 or change (e.g., increase or decrease) a level of operation of the component of the animal crate assembly 102. In some embodiments, the sensors 122 may include may include any suitable number and types of sensors at any suitable location(s).

The temperature sensor 124 may be configured to sense and measure an air temperature inside of the animal crate assembly 102 and output temperature data to the processor 104. The processor 104 may be configured to perform any of various operations based on or in response to receiving the temperature data. For example, the processor 104 may be configured to output the temperature data to another computing device (e.g., 212). Additionally, for example, the processor 104 may output the temperature data to the memory 106 and/or the storage 108 to be stored. Further, for example, the processor 104 may be configured to monitor the air temperature inside of the animal crate assembly 102 and output an alert for dangerous temperature conditions. The processor 104 may determine that the temperature inside of the animal crate assembly 102 is above an upper temperature threshold or below a lower temperature threshold; in response, the processor may output an alert message to another computing device (e.g., 212) to indicate that the temperature is above an upper temperature threshold or below a lower temperature threshold and to indicate what the temperature is. Similarly, the processor 104 may output an instruction or signal to illuminate the external lights 136 as an alert that the temperature is outside of a safe range of temperatures. Additionally, for example, if the processor 104 determines that the temperature is above an upper temperature threshold or below a lower temperature threshold, the processor may send an instruction or signal to activate or deactivate the fan 142 or change (e.g., increase or decrease) a level of operation of the fan 142.

The accelerometer 126 may be configured to sense and measure a proper acceleration, which is the acceleration of a body in the body's own instantaneous rest frame, of the animal crate assembly 102. The accelerometer 126 may be installed at any suitable position on or in the animal crate assembly 102. The accelerometer 126 may be configured to sense and measure proper acceleration of the animal crate assembly 102 and output accelerometer data to the processor 104. The processor 104 may be configured to perform any of various operations based on or in response to receiving the accelerometer data. For example, the processor 104 may be configured to monitor for the occurrence of drops, impacts, or tilts of the animal crate assembly 102 and output an alert if the processor determines that the accelerometer data is indicative of a dangerous condition. For example, the processor 104 may be configured to output the accelerometer data to another computing device (e.g., 212). Additionally, for example, the processor 104 may output the accelerometer data to the memory 106 and/or the storage 108 to be stored. The processor 104 may be configured to determine that the proper acceleration of the animal crate assembly 102 is above a proper acceleration threshold; in response, the processor 104 may output an alert message to another computing device (e.g., 212) to indicate that the proper acceleration is above an proper acceleration threshold and to indicate what the measured proper acceleration is. Similarly, the processor 104 may output an instruction or signal to illuminate the external lights 136 as an alert that the proper acceleration has been measured above the proper acceleration threshold.

The weight sensor 128 may be configured to sense and measure a weight of the animal inside of the animal crate assembly 102. The weight sensor 128 may be installed at any suitable position on or in the animal crate assembly 102, such as on or under the floor of the animal crate assembly 102 or in the bottom of the animal crate assembly 102. The weight sensor 128 may be configured to sense and measure a weight of the animal and output weight data to the processor 104. The processor 104 may be configured to perform any of various operations based on or in response to receiving the weight data. For example, the processor 104 may be configured to monitor for the presence or absence of the animal in the animal crate assembly 102 based on the weight data and output an alert if the processor 104 determines that the weight data is indicative of the animal being absent from the animal crate assembly 102. For example, the processor 104 may be configured to output the weight data to another computing device (e.g., 212). Additionally, for example, the processor 104 may output the weight data to the memory 106 and/or the storage 108 to be stored. The processor 104 may be configured to determine that the weight data is indicative of a weight of the animal crate assembly 102 and/or the animal being below a weight threshold; in response, the processor 104 may output an alert message to another computing device (e.g., 212) to indicate that the animal is absent from the animal crate assembly 102. Similarly, the processor 104 may output an instruction or signal to illuminate the external lights 136 as an alert that the animal is absent from the animal crate assembly 102.

The pressure sensor 130 may be configured to sense and measure an air pressure inside of the animal crate assembly 102. The pressure sensor 128 may be installed at any suitable position on or in the animal crate assembly 102. The pressure sensor 130 may be configured to sense and measure an air pressure and output pressure data to the processor 104. The processor 104 may be configured to perform any of various operations based on or in response to receiving the pressure data. For example, the processor 104 may be configured to monitor pressure data for unsafe, low air pressures and output an alert if the processor 104 determines that the pressure data is indicative of an unsafe, low air pressure within the animal crate assembly 102. For example, the processor 104 may be configured to output the pressure data to another computing device (e.g., 212). Additionally, for example, the processor 104 may output the pressure data to the memory 106 and/or the storage 108 to be stored. The processor 104 may be configured to determine that the pressure data is indicative of an air pressure in the animal crate assembly 102 being below an air pressure threshold; in response, the processor 104 may output an alert message to another computing device (e.g., 212) to indicate that the air pressure is unsafe. Similarly, the processor 104 may output an instruction or signal to illuminate the external lights 136 as an alert that the air pressure is unsafe in animal crate assembly 102.

The animal wearable sensor device (e.g., 416, as shown in FIG. 4) may include a temperature sensor, an accelerometer, an animal heart rate sensor, and an oximeter, as well as any suitable animal sensors. The animal wearable sensor device (e.g., 416, as shown in FIG. 4) may be worn by the animal (e.g., 418, as shown in FIG. 4), such as around the neck or leg of an animal or attached to a collar. The animal wearable sensor device (e.g., 416, as shown in FIG. 4) may be configured to sense and measure animal conditions and output animal sensor data (e.g., animal temperature data, animal accelerometer data, animal heart rate data, and/or oxygen level data) to the processor 104. The processor 104 may be configured to perform any of various operations based on or in response to receiving the animal sensor data. For example, the processor 104 may be configured to output the animal sensor data to another computing device (e.g., 212). Additionally, for example, the processor 104 may output the animal sensor data to the memory 106 and/or the storage 108 to be stored. Further, for example, the processor 104 may be configured to monitor animal conditions and output an alert for dangerous animal conditions. The processor 104 may determine that an animal condition is above an upper animal condition threshold or below a lower animal condition threshold; in response, the processor may output an alert message to another computing device (e.g., 212) to indicate that the animal condition is above an upper animal condition threshold or below a lower animal condition threshold and to indicate what the animal condition is. Similarly, the processor 104 may output an instruction or signal to illuminate the external lights 136 as an alert that the animal condition is outside of a safe range of animal conditions. Additionally, for example, if the processor 104 determines that the animal condition is above an upper animal condition threshold or below a lower animal condition threshold, the processor may send an instruction or signal to activate or deactivate a component (e.g., the fan 142, the scent dispenser 38, the treat dispenser 140, one or more of the cameras 118, one or more of the microphones 116, and/or one or more of the lights 132) of the animal crate assembly 102 or change (e.g., increase or decrease) a level of operation of the component of the animal crate assembly 102.

The internal lights 134 may be implemented in or on an interior portion of the animal crate assembly 102, such as in or on the ceiling of the animal crate assembly 102. The internal lights 134 may be configured to illuminate the interior of the animal crate assembly 102. In some embodiments, the processor 104 may be configured to output an instruction or signal to activate or deactivate the internal lights 134 or change (e.g., increase or decrease a brightness) a level of operation of the internal lights 134.

The external lights 136 may be implemented in or on an exterior portion of the animal crate assembly 102, such as on the top or sides of the animal crate assembly 102. The external lights 136 may be configured to illuminate as an alert. In some embodiments, the processor 104 may be configured to output an instruction or signal to activate or deactivate the external lights 136 or change (e.g., increase or decrease a brightness, change a color, and/or change a blinking pattern) a level of operation of the external lights 136.

The scent dispenser 138 may be implemented in or on an interior portion of the animal crate assembly 102, such as in or on the ceiling of the animal crate assembly 102. The scent dispenser 138 may be configured to dispense a scent, which may, for example, calm an animal inside of the animal crate assembly 102. For example, the dispensed scent may include a pheromone, a valerian root scent, and/or a lavender scent. In some embodiments, the processor 104 may be configured to output an instruction or signal to activate or deactivate the scent dispenser 138 causing the scent dispenser 138 to dispense a scent.

A food dispenser (e.g., the treat dispenser 140) may be implemented in or on an interior portion of the animal crate assembly 102, such as in or on the ceiling of the animal crate assembly 102. The treat dispenser 140 may be configured to dispense a treat. In some embodiments, the processor 104 may be configured to output an instruction or signal to activate or deactivate the treat dispenser 140 causing the treat dispenser 140 to dispense a treat.

The fan 142 may be implemented in or on the animal crate assembly 102, such as in or on a rear wall (e.g., opposite a door) of the animal crate assembly 102. The fan 142 may be configured to circulate air from outside of the animal crate assembly 102 to the interior of the animal crate assembly 102. In some embodiments, the processor 104 may be configured to output an instruction or signal to the fan 142 to cause the fan 142 to activate or deactivate or change (e.g., increase or decrease) a level of operation of the fan 142.

The antennas 144 may be implemented as or may include any suitable antennas or antenna devices. The antennas 144 may be configured to send and receive data over a wireless connection. For example, the processor 104 may be configured to send and receive data to and from a computing device via the antennas 144. In some embodiments, the animal crate assembly 102 may include any suitable number and types of antennas at any suitable location(s).

Referring now to FIG. 2, an exemplary embodiment of a network topology including the animal crate assembly 102 and a computing device 212 according to the inventive concepts disclosed is depicted. The network topology may include the animal crate assembly 102, a mobile network antenna 202, a network 204, a WiFi antenna 206, a router 208, a network 210, and a computing device 212, some or all of which may be communicatively coupled at any given time. The animal crate assembly 102 may be configured to communicate with any suitable computing device (e.g., 212) over any suitable network(s) (e.g., 204 and/or 210).

The computing device 212 may be implemented as any suitable computing device (e.g., a desktop computing device, an aircraft computing device (e.g., a seat-back computing device and/or an avionics computing device), and/or a mobile computing device (e.g., a laptop computing device, tablet computing device, and/or a phone computing device)), such as the animal owner's computing device. The computing device 212 may include a processor 214, at least one computer-readable medium (e.g., memory 216 and storage 218), an aircraft passenger display 220, a camera 222, a speaker 224, a microphone 226, and antennas 228, as well as any other components typically included in computing devices, some or all of which may be communicatively coupled at any given time.

The processor 214 may be configured to run various software applications or computer code stored (e.g., maintained) in a non-transitory computer-readable medium (e.g., memory 216 and/or storage 218) and configured to execute various instructions or operations. For example, the processor 214 may be configured to receive data and/or instructions from various sources (e.g., the memory 216, the storage 218, the microphone 226, the display 220, the camera 222, the antennas 228, the animal crate assembly 102 via one or more of the antennas 228, and/or another computing device via one or more of the antennas 228). The processor 214 may be configured to perform various operations on the received data and/or in response to the received data. Additionally, the processor 214 may be configured to output data (e.g., processed data and/or received data) and/or instructions to various destinations (e.g., the memory 216, the storage 218, the speaker 224, the display 220, the antennas 228, the animal crate assembly 102 via one or more of the antennas 228, and/or another computing device via one or more of the antennas 228). Additionally, for example, the processor 104 may be implemented as a special purpose processor configured (e.g., programmed) to execute instructions for performing any or all of the operations disclosed throughout. In some embodiments, the processor 104 may be implemented as any suitable number of processors.

The memory 216 and/or storage 218 may be configured to store various software applications, computer code, data, and/or instructions, which may be accessed by the processor 214.

The aircraft passenger display 220 may be configured to graphically present video and/or images captured by the cameras 118 of the animal crate assembly 102. Additionally, the display 220 may be configured to display information associated with the animal crate assembly 102. Such information may include information associated with sensor data and/or GPS data. Additionally, the display 220 may include user-interfaceable elements configured to control various elements (e.g., the processor 102, the internal display 110, the external display 112, the speakers 114, the microphones 116, the cameras 118, the lights 132, the scent dispenser 138, the treat dispenser 140, and/or the fan 142) of the animal crate assembly 102.

The camera 222 may be configured to capture video and/or images of the user, and the processor 214 may send video data and/or image data to the animal crate assembly 102 via the antennas 228 such that the video of the user may displayed by the internal display 110 of the animal crate assembly 102.

The speaker 224 may be configured to audibly present audio captured by the microphones 116 of the animal crate assembly 102.

The microphone 226 may be configured to capture audio of the user, and the processor 214 may send audio data to the animal crate assembly 102 via the antennas 228 such that the audio of the user may presented by the speakers 114 of the animal crate assembly 102.

The antennas 228 may be implemented as or may include any suitable antennas or antenna devices. The antennas 228 may be configured to send and receive data over a wireless connection. For example, the processor 214 may be configured to send and receive data to and from the animal crate assembly 102 via the antennas 228. In some embodiments, the computing device 212 may include any suitable number and types of antennas at any suitable location(s).

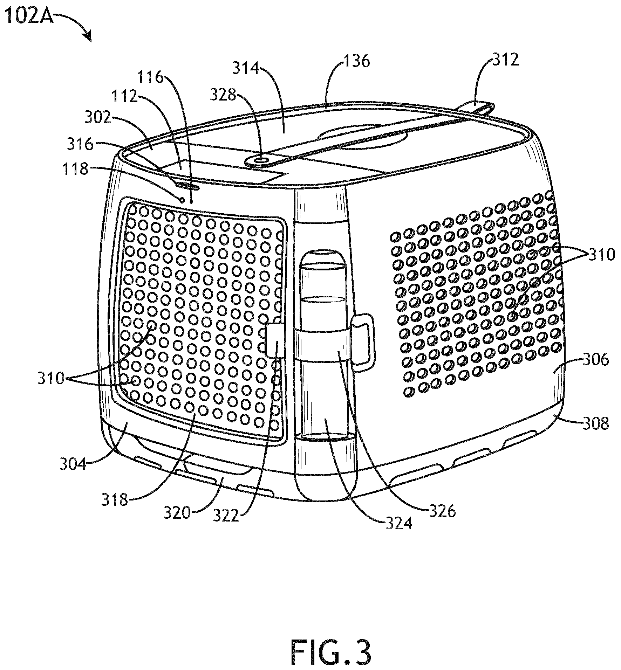

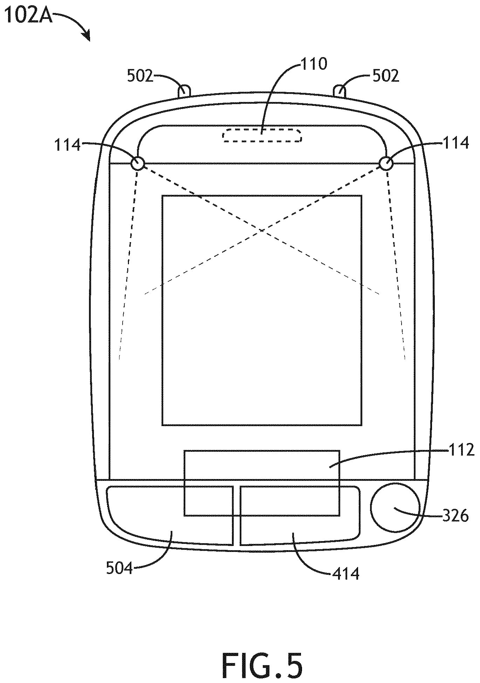

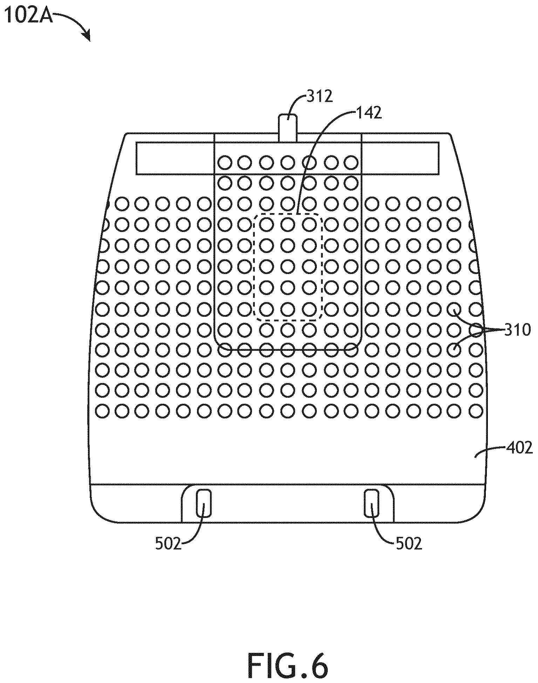

Referring now to FIGS. 3-6, an exemplary embodiment of animal crate assembly 102A according to the inventive concepts disclosed is depicted. The animal crate assembly 102A may include any or all of the components of the animal crate assembly 102 and may be implemented similarly to the animal crate assembly 102.

The animal crate assembly 102A may include a top portion 302, a front portion 304, side portions 306, a bottom portion 308, a rear portion 402, and a door 318. For example, the side portions 306, the rear portion 402, and the door 318 may include ventilation holes 310.

The top portion 302 may include a loop 312, a storage compartment 314, a storage compartment latch 328, a leash attachment point 316, an electronics compartment 404, a fold-out handle 406, the scent dispenser 138, the treat dispenser 140, the internal display 110, the external display 112, and the speakers 114. The electronics compartment 404 may be configured to house various electronic components of the animal crate assembly 102A.

The front portion 304 may include the external camera 118, the external microphone 116, and a door latch 322 configured to latch the door 318.

A water container 324 may be implemented along an edge between one of the side portions 306 and the front portion 304. The water container 324 may be secured in place by a water container strap 326.

The bottom portion 308 may have a slip-resistant surface. The bottom portion 308 may include a slide-out tray 320 and wheels 502. The slide-out tray 320 may be configured to be slid out of the bottom portion 308. The slide-out tray 320 may include a water dish 414 configured to receive water from the water container 324, a food tray 504, a comfort pad with drain holes 408 that the animal can rest on, coolant 410, and an absorbent pad 412. The water container 324 may be configured to slide out with the slide-out tray 320 when the slide-out tray is pulled out of the bottom portion 308.

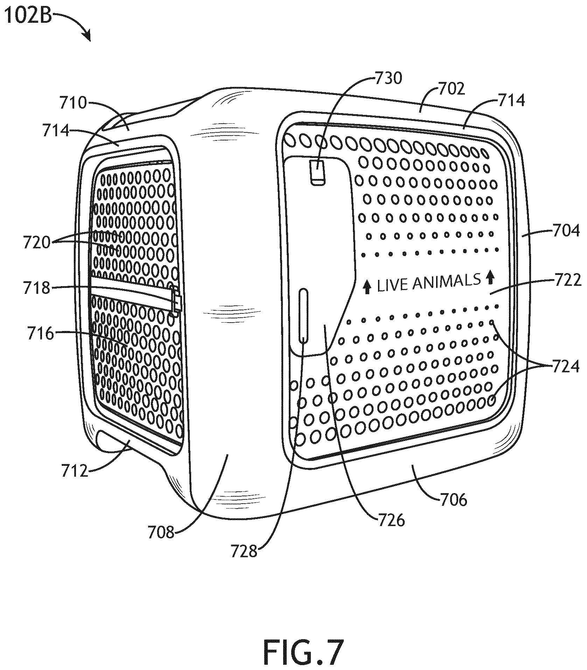

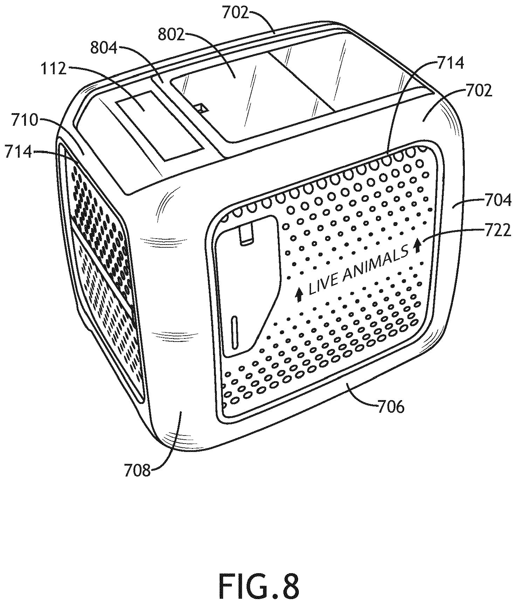

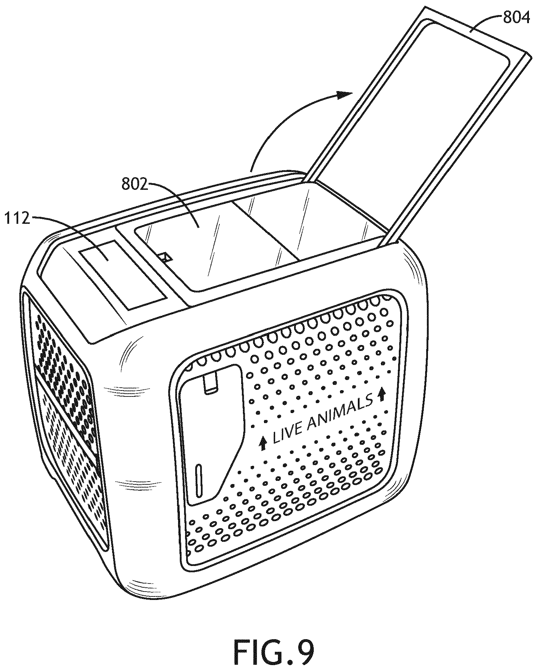

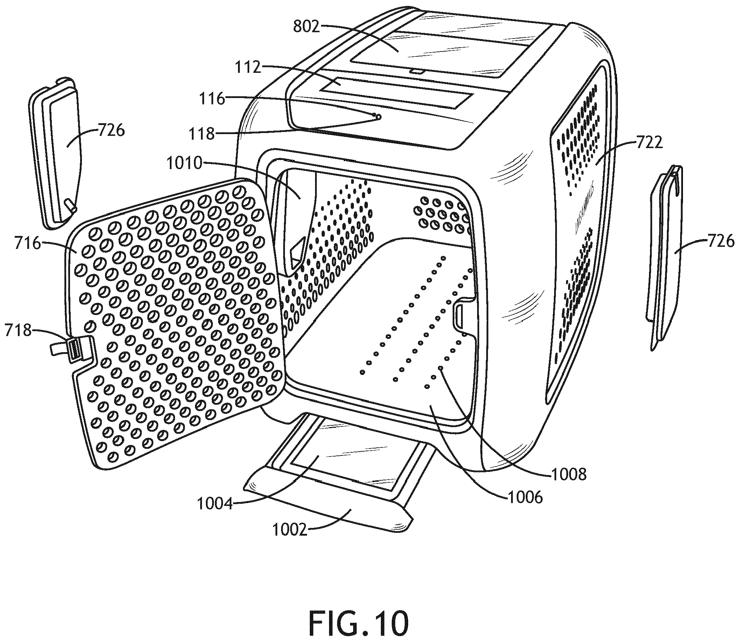

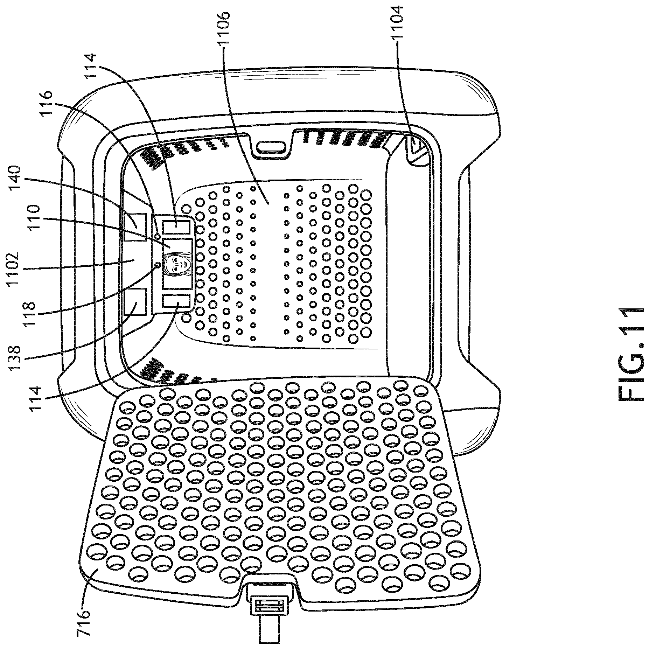

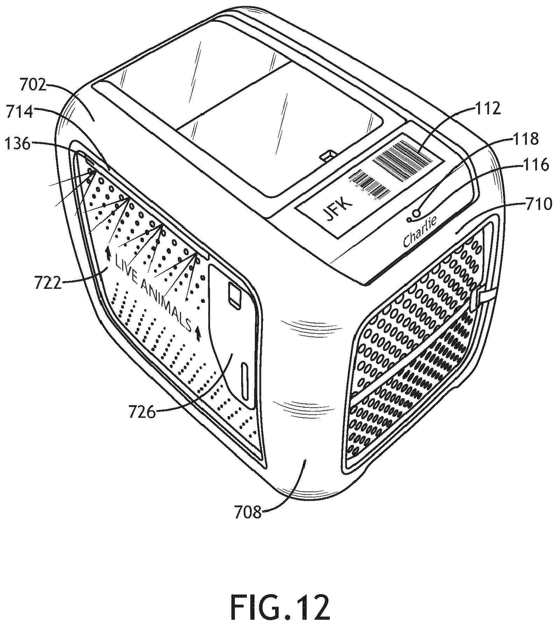

Referring now to FIGS. 7-13B, an exemplary embodiment of animal crate assembly 102B according to the inventive concepts disclosed is depicted. The animal crate assembly 102B may include any or all of the components of the animal crate assembly 102 and may be implemented similarly to the animal crate assembly 102.

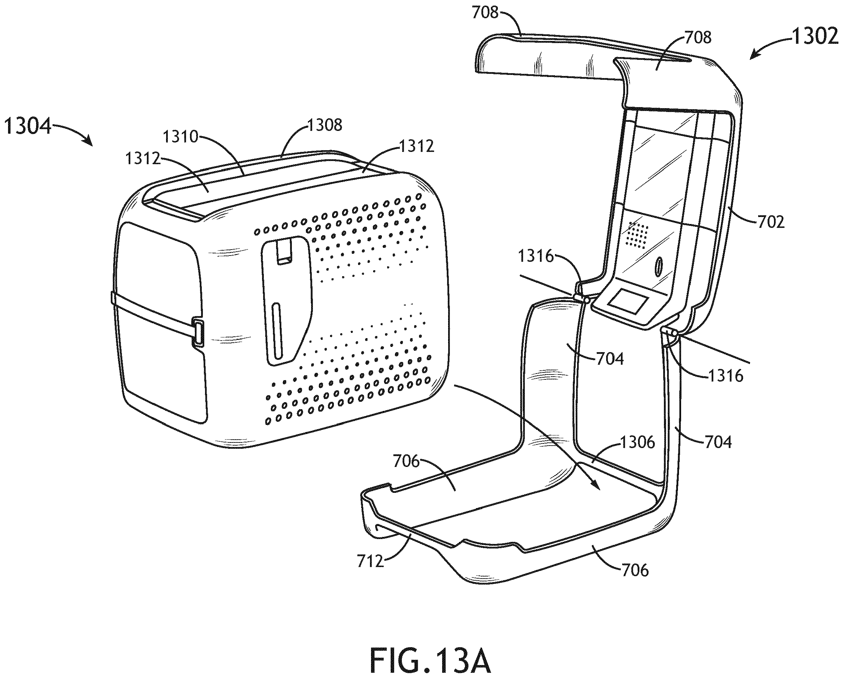

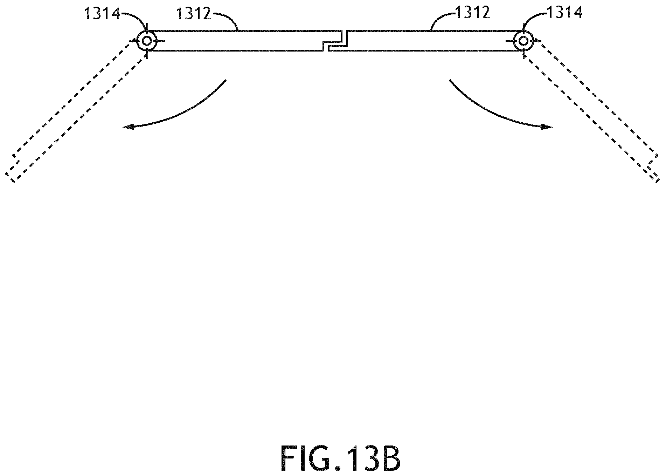

In some embodiments, the animal crate assembly 102B may include an inner crate 1304 and a removable exterior portion 1302 configured to fit around the inner crate 1304. For example, the removable exterior portion 1302 may slide around the inner crate 1304, or the removable exterior portion 1302 may have hinges 1316 (e.g., spring hinges) that allows to the removable exterior portion 1302 to enclose the interior crate, such as shown in FIG. 13A. The removable exterior portion 1302 can be secured around the inner crate 1304 by any suitable means, such as straps, clasps, or latches.

The inner crate 1304 may include a top portion 1308, side portions 722, a door 716, a bottom portion 1006, a rear portion 1106, and wheels (not shown).

The top portion 1308 of the inner crate 1304 may include a top aperture 1310, which may be closed when the inner crate 1304 is removed from the removable exterior portion 1302 and opened when the removable exterior portion 1302 is installed around the inner crate 1304, such that the electronic components of the removable exterior portion 1302 can have access to the interior of the inner crate 1304. For example, the top portion 1308 of the inner crate 1304 may include at least one panel (e.g., at least one removable panel or at least one open and closable panel (e.g., trapdoor panels 1312)) such that the at least one panel may close off the top aperture 1310 when the inner crate 1304 is removed from the removable exterior portion 1302 but allow an underside of the top portion 702 of the removable exterior portion 1302 to protrude through the top aperture 1310 of the inner crate 1304 when the inner crate 1304 is positioned within the removable exterior portion 1302. For example, the at least one panel may be trapdoor panels 1312 configured to open toward the interior of the inner crate 1304 when force is applied from above, such as when the underside of the top portion 702 of the removable exterior portion 1302 is pressed against the trapdoor panels 1312. The trapdoor panels 1312 may be attached to the top portion 1308 of the inner crate 1304 with spring hinges 1314 configured to keep the top aperture 1310 closed when little or no force is acting on the top of the trapdoor panels 1312.

Each of the side portions 722 may include ventilation holes 724 and a water container 726. The ventilation holes 724 may be larger near the top and bottom of the inner crate 1304 so as to promote air circulation. Each water container 726 may be removable from a corresponding side portion 722 by releasing a water container latch 730. The water containers 726 may also include a window 728 such that a water level is viewable.

The rear portion 1106 may include ventilation holes 724. The ventilation holes 724 may be larger near the top and bottom of the inner crate 1304 so as to promote air circulation.

The door 716 may include a latch 718 and ventilation holes 720.

The bottom portion 1006 may have a slip-resistant floor with drain holes 1008. The bottom portion 1006 may include a slide-out tray configured to slide out from under the floor. The slide-out tray 1002 may include an absorbent pad 1004, which may be easily replaced.

An interior portion of the inner crate 1304 may include water and food dishes 1104.

The removable exterior portion 1302 may include at least some of the electronic components. The removable exterior portion 1302 may include a top portion 702, vertical front edge portions 708, vertical rear edge portions 704, a horizontal bottom rear edge portion 1306, horizontal bottom side edge portions 706, horizontal bottom front edge portion 712, and a horizontal top front edge portion 710. The top portion 702 and the edge portions of the removable exterior portion 1302 may include bumpers configured to reduce shock if the animal crate assembly 102B is mishandled or dropped. For example, the top portion 702 and the edge portions may include plastic and rubber to reduce shock. Additionally, the top portion 702 and the edge portions may include overhang portions 714 where a handler can easily grab the animal crate assembly 102B. The removable exterior portion 1302 may include the external lights 136, which may, for example, be positioned under one or more of the overhang portions 714.

The top portion 702 may include a storage compartment 802, a fold-out handle 804, the external display 112, the external camera 118, the external microphone 116, an electronics compartment 1102, the scent dispenser 138, the treat dispenser 140, the internal display 110, the speakers114, the internal camera 118, and the internal microphone 116. The electronics compartment 1102 may be configured to house various electronic components of the animal crate assembly 102B.

In some embodiments, folding out the handle 804 may cause wheels to deploy or unlock, and folding the handle 804 down may cause the wheels to lock or retract.

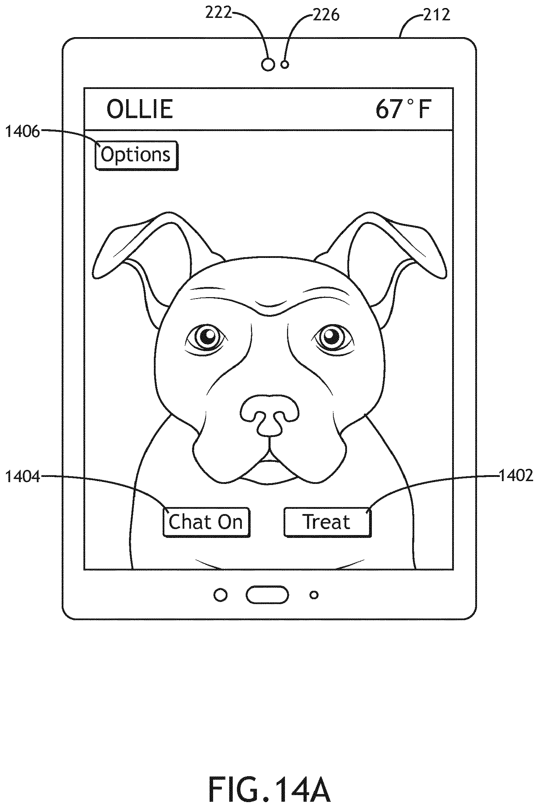

Referring now to FIG. 14A, an exemplary embodiment of the computing device 212 according to the inventive concepts disclosed is depicted. The computing device 212 may be configured to engage in a two-way audio-video chat with an animal housed in the animal crate assembly 102. The computing device 212 may be configured to present various information and data associated with the animal crate assembly 102. For example, the computing device 212 may be configured to display the temperature and location of the animal crate assembly. The computing device 212 may be configured to control various components of the animal crate assembly 102 based on user inputs, such as based on a user interfacing with buttons 1402, 1404, and 1406.

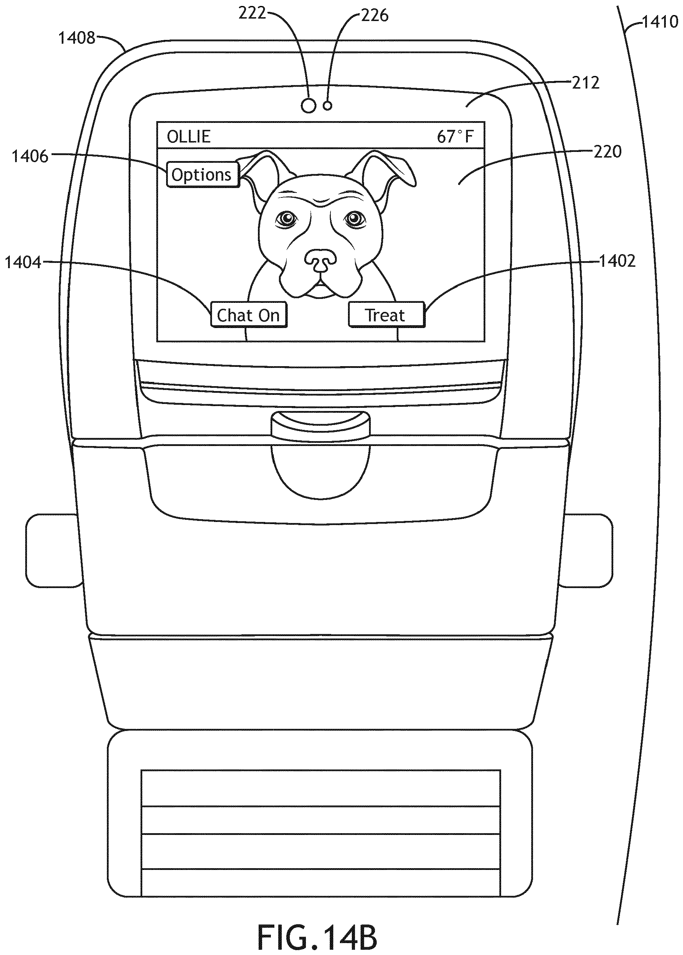

Referring now to FIG. 14B, an exemplary embodiment of the computing device 212 implemented as an aircraft passenger computing device implemented in and/or on an aircraft passenger seat 1408 of an aircraft 1410 according to the inventive concepts disclosed is depicted. The aircraft passenger computing device may be configured to engage in a two-way audio-video chat with an animal housed in the animal crate assembly 102. The aircraft passenger computing device is configured to present various information and data associated with the animal crate assembly 102. For example, the aircraft passenger computing device may be configured to display the temperature and location of the animal crate assembly. The aircraft passenger computing device may be configured to control various components of the animal crate assembly 102 based on user inputs, such as based on a user interfacing with buttons 1402, 1404, and 1406.

In some embodiments, the aircraft passenger computing device is implemented in and/or on an aircraft passenger seat 1408 in front of a passenger's aircraft passenger seat such that the passenger can view and interact with the aircraft passenger computing device. In other embodiments, the aircraft passenger computing device is implemented in proximity to the passenger's aircraft passenger seat, such as in and/or on a wall or divider within arm's reach (e.g., within four feet) of the passenger's aircraft passenger seat.

The aircraft passenger computing device is communicatively coupled to the animal crate assembly 102 onboard the aircraft 1410. The aircraft passenger computing device includes a display 220 (e.g., an aircraft passenger display) viewable by the passenger and the processor 214 communicatively coupled to the display 220. The processor 214 is configured to receive sensor data from at least one sensor (e.g., 122, 124, 126, 128, and/or 130) implemented in or on the animal crate assembly 102 and to receive captured animal crate assembly video data from the camera 118 implemented in or on the animal crate assembly 102. The processor 214 is configured to generate graphical data based at least on the sensor data and the captured animal crate assembly video data, and configured to output the graphical data to the aircraft passenger display for presentation to the passenger.

The aircraft passenger computing device further includes a camera 222 (e.g., an aircraft passenger camera) in view of the passenger and configured to capture video data of the passenger. The processor 214 is further configured to output the video data of the passenger for transmission to the animal crate assembly 102 for presentation on a display 110 within the animal crate assembly 102.

The aircraft passenger computing device may further include a microphone 226 configured to capture audio of the passenger. The processor 214 may be further configured to receive audio data of the passenger from the microphone 226 and output the audio data of the passenger for transmission to the animal crate assembly 102 for presentation by a speaker 114 of the animal crate assembly 102.

The processor 214 may be further configured to receive animal crate assembly audio data from an animal crate assembly camera 118 implemented in or on the animal crate assembly 102 and to output the animal crate assembly audio data for presentation to the passenger.

The processor 214 may be further configured to receive an alert message from the animal crate assembly 102, the alert message being indicative of a condition associated with the animal crate assembly 102 or an animal housed in the animal crate assembly 102 being above an upper condition threshold or below a lower condition threshold. The processor 214 may be further configured to generate alert graphical data based at least on the alert message and output the alert graphical data to the aircraft passenger display for presentation to the passenger.

The processor 214 may be further configured to output an instruction or signal for transmission to the animal crate assembly 102, the message configured to trigger the animal crate assembly 102 to send at least one of the sensor data or the captured animal crate assembly video data to the aircraft passenger computing device.

The processor 214 may be further configured to receive a user input associated with causing a food dispenser (e.g., treat dispenser 140) in the animal crate assembly 102 to dispense food and output an instruction or signal for transmission to the animal crate assembly 102 to cause the food dispenser in the animal crate assembly 102 to dispense food.

The processor 214 may be further configured to receive a user input associated with causing a scent dispenser 138 in the animal crate assembly 102 to dispense a scent and output an instruction or signal for transmission to the animal crate assembly 102 to cause the scent dispenser 138 in the animal crate assembly 102 to dispense the scent.

The processor 214 may be further configured to receive a user input associated with causing a light (e.g., 134 or 136) in or on the animal crate assembly 102 to illuminate and output an instruction or signal for transmission to the animal crate assembly 102 to cause the light (e.g., 134 or 136) in or on the animal crate 102 assembly to illuminate.

The processor 214 may be further configured to receive a user input associated with causing a fan 142 of the animal crate assembly 102 to activate or deactivate or change a level of operation of the fan 142. The processor 214 may be further configured to output an instruction or signal for transmission to the animal crate assembly 102 to cause the fan 142 of the animal crate assembly 102 to activate or deactivate or change a level of operation of the fan 142.

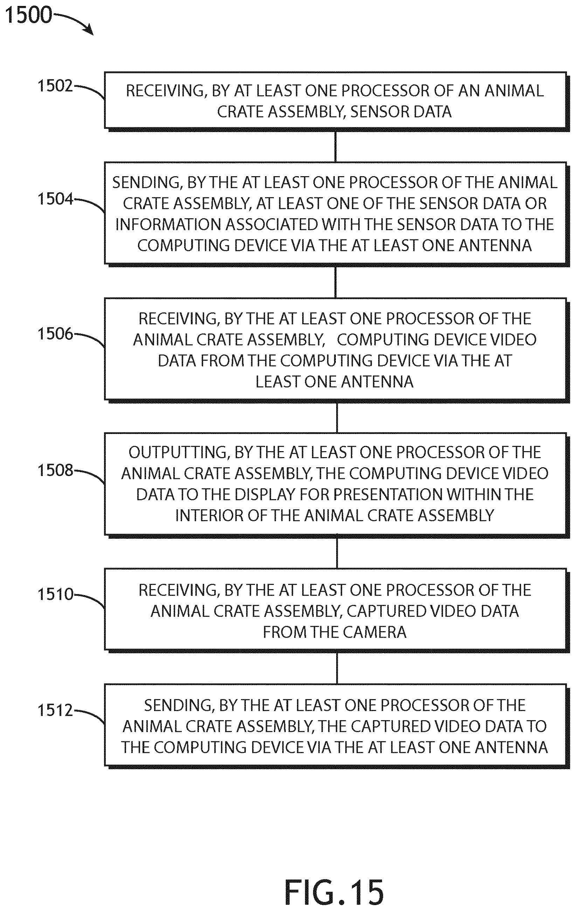

Referring now to FIG. 15, an exemplary embodiment of a method 1500 according to the inventive concepts disclosed herein may include one or more of the following steps. Some embodiments may include performing one or more steps of the method 1500 iteratively, concurrently, sequentially, and/or non-sequentially. Additionally, for example, some embodiments may include performing one or more instances of the method 1500 iteratively, concurrently, and/or sequentially.

A step 1502 includes receiving, by at least one processor of an animal crate assembly, sensor data.

A step 1504 may include sending, by the at least one processor of the animal crate assembly, at least one of the sensor data or information associated with the sensor data to the computing device via the at least one antenna.

A step 1506 may include receiving, by the at least one processor of the animal crate assembly, computing device video data from the computing device via the at least one antenna.

A step 1508 may include outputting, by the at least one processor of the animal crate assembly, the computing device video data to the display for presentation within the interior of the animal crate assembly.

A step 1510 may include receiving, by the at least one processor of the animal crate assembly, captured video data from the camera.

A step 1512 may include sending, by the at least one processor of the animal crate assembly, the captured video data to the computing device via the at least one antenna.

Further, the method 1500 may include any of the operations disclosed throughout.

As will be appreciated from the above, embodiments of the inventive concepts disclosed herein may be directed to an animal crate assembly, a system, and a method.

As used throughout and as would be appreciated by those skilled in the art, "at least one non-transitory computer-readable medium" may refer to as at least one non-transitory computer-readable medium (e.g., memory 106, memory 216, storage 108, storage 218, or a combination thereof; e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein include the steps as defined in the method claim and may include one or more of the additional steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts defined in the claims.

## Claims

1. An apparatus, comprising:
an aircraft passenger computing device (212) implemented in, on, or in proximity to an aircraft passenger seat (1408), the aircraft passenger computing device (212) communicatively coupled to an animal crate assembly (102) onboard an aircraft, the aircraft passenger computing device (212) comprising:
an aircraft passenger display (220) viewable by a passenger; and
at least one processor (214) communicatively coupled to the aircraft passenger display (220), wherein the processor (214) is configured to:
receive sensor data from at least one sensor (122, 124, 126, 128, 130) implemented in or on the animal crate assembly (102);
receive captured animal crate assembly video data from a crate assembly camera (118) implemented in or on the animal crate assembly (102);
generate graphical data based at least on the sensor data and the captured animal crate assembly video data; and
output the graphical data to the aircraft passenger display (220) for presentation to the passenger.

2. A system, comprising:
an aircraft passenger seat (1408) implemented in an aircraft; and an apparatus according to claim 1.

3. The system according to claim 2, wherein the aircraft passenger computing device (212) further comprises an aircraft passenger camera (222) in view of a passenger seated in an associated passenger seat (1408) and configured to capture video data of the passenger, wherein the processor (214) is further configured to:
output the video data of the passenger for transmission to an associated animal crate assembly (102) for presentation on an aircraft animal display (110) within the animal crate assembly (102).

4. The system according to claim 3, wherein the aircraft passenger computing device (212) further comprises a passenger microphone (226) configured to capture audio of the passenger, wherein the processor (214) is further configured to:
receive audio data of the passenger from the passenger microphone (226); and
output the audio data of the passenger for transmission to the animal crate assembly (102) for presentation by at least one animal crate assembly speaker (114) of the animal crate assembly (102).

5. The system according to claim 3 or 4, wherein the processor (214) is further configured to:
receive animal crate assembly audio data from an animal crate assembly camera (118) implemented in or on the animal crate assembly (102); output the animal crate assembly audio data for presentation to the passenger.

6. The system according to one or more of claims 3-5, further comprising:
an animal crate assembly (102), comprising:
at least one processor (104) implemented in or on the animal crate assembly (102);
a non-transitory computer-readable medium (106, 108) communicatively coupled to the at least one processor (104) and implemented in or on the animal crate assembly (102);
at least one antenna communicatively coupled to the at least one processor (104) and implemented in or on the animal crate assembly (102);
at least one sensor (122, 124, 126, 128, 130) communicatively coupled to the at least one processor (104) and implemented in or on the animal crate assembly (102), the at least one sensor (122, 124, 126, 128, 130) configured to sense at least one condition and output the sensor data to the at least one processor (104);
a crate assembly camera (118) communicatively coupled to the at least one processor (104) and implemented in or on the animal crate assembly (102), the crate assembly camera (118) configured to capture video of an interior of the animal crate assembly (102) and output captured animal crate assembly video data to the at least one processor (104); and
the internal and/or an external aircraft animal display (110, 112) communicatively coupled to the at least one processor (104) and implemented in or on the animal crate assembly (102), the animal display (110, 112) viewable within the interior of the animal crate assembly (102);
wherein the at least one processor (104) is configured to:
receive sensor data sensed by the at least one sensor (122, 124, 126, 128, 130);
send at least one of the sensor data or information associated with the sensor data to the aircraft passenger computing device (212);
receive the video data of the passenger from the aircraft passenger computing device (212);
output video data of the passenger captured by the aircraft passenger camera (222) to the internal animal display (110) for presentation within the interior of the animal crate assembly (102);
receive the captured animal crate assembly video data from the crate assembly camera (118); and
send the captured animal crate assembly video data to the aircraft passenger computing device (212);
wherein the animal crate assembly (102) is configured to house an animal.

7. The system according to claim 6, wherein the animal crate assembly (102) further comprises an animal crate assembly microphone (116) and at least one animal crate assembly speaker (114) implemented in or on the animal crate assembly, the animal crate assembly microphone (116) configured to capture animal crate assembly audio of the interior of the animal crate assembly (102) and output animal crate assembly audio data to the at least one processor (104), the at least one animal crate assembly speaker (114) being audible within the interior of the animal crate assembly (102), wherein the at least one processor (104) is further configured to:
receive audio data of the passenger from the aircraft passenger computing device (212) via the at least one antenna (144, 228);
output the audio data of the passenger to the at least one animal crate assemble speaker (114) for presentation within the interior of the animal crate assembly (102);
receive the animal crate assembly audio from the animal crate assembly microphone (116); and
send the animal crate assembly audio to the aircraft passenger computing device (212) via the at least one antenna (144, 228).

8. The system according to claims 4 and 7, wherein the at least one speaker (114, 224) comprises speakers, wherein the at least one processor (104) is further configured to perform active noise cancellation operations to cancel out environmental noise within the animal crate assembly (102) and output noise cancelling signals to the speakers (114, 224).

9. The system according to one or more of claims 6-8, wherein the at least one processor (104) is further configured to:
determine that a condition associated with the animal crate assembly (102) or the animal housed in the animal crate assembly (102) is above an upper condition threshold or below a lower condition threshold; and
output at least one of an alert message to the passenger computing device (212) via the at least one antenna (144, 228), an instruction or signal to activate or deactivate a component of the animal crate assembly (102), or an instruction or signal to illuminate an external light of the animal crate assembly (102) as an alert.

10. The system according to one or more of claims 6-9, wherein the animal crate assembly (102) further comprises an inner crate (1304) and an exterior portion (1302), the exterior portion (1302) configured to removably fit around the inner crate (1304),
wherein the inner crate (1304) comprises a top portion (1308), side portions (722), a door (716), a bottom portion (1006), a rear portion (1106), and wheels, the top portion (1308) including an aperture (1310), the side portions (722) including ventilation holes (724) with larger ventilation holes near a top and bottom of the side portions (722), at least one of the side portions (722) including a removable water container (726) having a window (728), the door (716) including a door latch (718) and door ventilation holes (1006), the bottom portion having a slip-resistant floor with drain holes, the bottom portion including a slide-out tray configured to slide out from under the floor, the slide-out tray including an absorbent pad (1004),
wherein the exterior portion (1302) includes a top exterior portion (702), vertical front edge portions (708), vertical rear edge portions (704), a horizontal bottom rear edge portion (1306), horizontal bottom side edge portions (706), a horizontal bottom front edge portion (712), a horizontal top front edge portion (710), and overhang portions (714), the top exterior portion (702) and the edge portions (704, 708) including bumpers configured to reduce shock, wherein external lights (136) are implemented beneath at least some of the overhang portions (714), wherein the top exterior portion (702) includes a storage compartment (314), a fold-out handle (406), an external display (112), an external camera (118), an external microphone (116), an electronics compartment (404), a scent dispenser (138), a treat dispenser (140), the display (110), speakers (114), the camera (118), an internal microphone (116), and a global positioning system (GPS) device (120).

11. The system according to one or more of claims 2-10, wherein the processor (214) is further configured to:
receive an alert message from the animal crate assembly (102) comprises an alert message receiver and, the alert message being indicative of a condition associated with the animal crate assembly (102) or an animal housed in the animal crate assembly (102) being above an upper condition threshold or below a lower condition threshold;
generate alert graphical data based at least on the alert message; and output the alert graphical data to the aircraft passenger display (220) for presentation to the passenger.

12. The system according to one or more of claims 2-11, wherein the processor (214) is further configured to:
output an instruction or signal for transmission to the animal crate assembly (102), the message configured to trigger the animal crate assembly (102) to send at least one of the sensor data or the captured animal crate assembly video data to the aircraft passenger computing device (212).

13. The system according to one or more of claims 2-12, wherein the sensor data comprises temperature data associated with a temperature of the animal crate assembly (102), and/or accelerometer data associated with a proper acceleration of the animal crate assembly (102), and/or weight data associated with a weight of an animal inside of the animal crate assembly (102), and/or pressure data associated with an air pressure within the animal crate assembly (102), and/or animal sensor data associated with an animal condition of an animal inside of the animal crate assembly (102).

14. The system according to one or more of claims 2-14, wherein the processor (214) is further configured to:
receive a user input associated with causing a food dispenser (140) in the animal crate assembly (102) to dispense food; and
output an instruction or signal for transmission to the animal crate assembly (102) to cause the food dispenser (140) in the animal crate assembly (102) to dispense food and/or to
receive a user input associated with causing a scent dispenser (138) in the animal crate assembly (102) to dispense a scent; and
output an instruction or signal for transmission to the animal crate assembly (102) to cause the scent dispenser (138) in the animal crate assembly (102) to dispense the scent, and/or to
receive a user input associated with causing a light (134, 136) in or on the animal crate assembly (102) to illuminate; and
output an instruction or signal for transmission to the animal crate assembly to cause the light (134, 136) in or on the animal crate assembly (102) to illuminate, and/or to
receive a user input associated with causing a fan (142) of the animal crate assembly (102) to activate or deactivate or change a level of operation of the fan (142); and
output an instruction or signal for transmission to the animal crate assembly (102) to cause the fan (142) of the animal crate assembly (102) to activate or deactivate or change a level of operation of the fan (142).

15. A method for operating an aircraft passenger computing device (212) implemented in, on, or in proximity to an aircraft passenger seat (1408), the aircraft passenger computing device (212) communicatively coupled to an animal crate assembly (102) onboard an aircraft, the aircraft passenger computing device (212) comprising an aircraft passenger display (220) viewable by a passenger and a processor (214) communicatively coupled to the aircraft passenger display (220), the method comprising:
receiving, by the processor (214), sensor data from at least one sensor (122, 124, 126, 128, 130) implemented in or on the animal crate assembly (102);
receiving, by the processor (214), captured animal crate assembly video data from a camera (118) implemented in or on the animal crate assembly (102);
generating, by the processor (214), graphical data based at least on the sensor data and the captured animal crate assembly video data; and
outputting, by the processor (214), the graphical data to the aircraft passenger display (220) for presentation to the passenger.
